# EUROPÄISCHE PATENTSCHRIFT

(11) **EP 2 772 043 B1**
(45) Veröffentlichungstag und Bekanntmachung des Hinweises auf die Patenterteilung: **13.04.2016**
(21) Anmeldenummer: 12779029.3
(22) Anmeldetag: 22.10.2012
(51) Int. Cl.: H04L 29/12

(54) **VERFAHREN ZUM AUTOMATISIERTEN ZUWEISEN JEWEILS EINER SPEZIFISCHEN KENNUNG ZU EINER VIELZAHL VON SENSOREN EINES KRAFTFAHRZEUGS, SYSTEM UND RECHENEINRICHTUNG**
METHOD FOR AUTOMATICALLY ASSIGNING A SPECIFIC IDENTIFIER TO EACH OF A PLURALITY OF SENSORS OF A MOTOR VEHICLE, SYSTEM AND COMPUTING DEVICE
PROCÉDÉ D'ATTRIBUTION AUTOMATIQUE D'UN INDICATIF SPÉCIFIQUE À CHAQUE CAPTEUR D'UNE PLURALITÉ DE CAPTEURS D'UN VÉHICULE AUTOMOBILE, SYSTÈME ET DISPOSITIF INFORMATIQUE

(30) Priorität: 27.10.2011 DE 102011117114
(43) Veröffentlichungstag der Anmeldung: 03.09.2014
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); JUNG, Thomas, 74074 Heilbronn (DE); GRUEDL, Dietmar, 71679 Asperg (DE); LILL, Anton, 74348 Lauffen am Neckar (DE); ROSTOCKI, Paul-David, 74177 Bad Friedrichshall (DE)
(86) Internationale Anmeldenummer: PCT/EP2012/070864
(87) Internationale Veröffentlichungsnummer: WO 2013/060643

(56) Entgegenhaltungen:
- EP-A1- 2 426 869
- DE-A1-102008 000 571
- DE-A1-102008 000 826

## Beschreibung

Die Erfindung betrifft ein Verfahren zum automatisierten Zuweisen je einer spezifischen Kennung zu einer Vielzahl von Sensoren, insbesondere Ultraschallsensoren, eines Fahrerassistenzsystems eines Kraftfahrzeugs mithilfe einer Recheneinrichtung, nämlich insbesondere mithilfe einer fahrzeugexternen Recheneinrichtung. Es geht dabei um ganz spezifische Sensoren, nämlich solche, die über einen gemeinsamen Kommunikationsbus des Kraftfahrzeugs mit einem fahrzeuginternen Steuergerät kommunizieren. Die Erfindung betrifft außerdem ein System, das zum Durchführen eines derartigen Verfahrens ausgebildet ist, wie auch eine Recheneinrichtung zum Ermöglichen einer automatisierten Zuweisung je einer spezifischen Kennung zu einer Vielzahl von Sensoren eines Kraftfahrzeugs.

Vorliegend richtet sich das Interesse insbesondere auf ein Parkhilfesystem eines Kraftfahrzeugs. Solche Parkhilfesysteme beinhalten in der Regel eine Vielzahl von Ultraschallsensoren, die an dem Kraftfahrzeug verteilt angeordnet sind. Das Parkhilfesystem unterstützt den Fahrer beim Einparken des Kraftfahrzeugs in eine Parklücke. Die Ultraschallsensoren messen dabei Abstände zwischen dem Kraftfahrzeug einerseits und den in seiner Umgebung befindlichen Hindernissen andererseits. Es existieren dabei unterschiedliche Typen von Parkhilfesystemen bzw. Fahrerassistenzsystemen: Zum einen sind einfache Systeme bekannt, bei welchen die Ultraschallsensoren jeweils über eine separate, eigene Signalleitung mit einem zentralen Steuergerät des Kraftfahrzeugs verbunden sind. Die Ultraschallsensoren kommunizieren hier über die separaten Signalleitungen mit dem Steuergerät, wobei jeder Sensor mit einer eigenen Signalleitung an das Steuergerät angeschlossen ist. In dem Steuergerät ist dabei stets bekannt, an welcher Position sich welcher Ultraschallsensor befindet. Dies bedeutet, dass das Steuergerät die jeweiligen Positionen aller Ultraschallsensoren am Kraftfahrzeug kennt. Diese Art von Systemen ist aufgrund des relativ großen Verkabelungsaufwands nur suboptimal.

Deshalb werden bei neuartigen Parkhilfesystemen die Ultraschallsensoren nicht mehr mittels separater Signalleitungen mit dem Steuergerät verbunden, sondern die Ultraschallserisoren kommunizieren mit dem Steuergerät über einen Kommunikationsbus des Kraftfahrzeugs, etwa über den CAN-Bus. Bei dieser Art der Verbindung muss zusätzlich noch jedem Ultraschallsensor eine spezifische Kennung bzw. Adresse im Gesamtsystem zugewiesen werden, welche gleichzeitig auch die Position des jeweiligen Sensors am Kraftfahrzeug kennzeichnet. Diese logischen Kennungen werden spezifisch den einzelnen Sensoren zugewiesen. Dies wird im Stand der Technik üblicherweise mittels einer Steckercodierung oder aber mittels einer Adressierungsleitung gelöst. Bei einer Steckercodierung wird in jeder Sensorposition eine andere, bekannte Codierung gewählt, welche dann der Adresse entspricht. Diese Adressierungsmöglichkeit ist zwar eindeutig und betriebssicher, jedoch ist sie auch mit erheblichen Nachteilen insbesondere hinsichtlich der Kosten verbunden, da ein größerer Sensorstecker mit entsprechenden Codierpins bereitgestellt werden muss. Bei der Adressierung mittels einer Adressierungsleitung wird hingegen eine zusätzliche Leitung zwischen allen Sensoren einerseits und dem Steuergerät andererseits benötigt. Hier werden die Ultraschallsensoren einer nach dem anderen in einer bekannten Reihenfolge adressiert. Auch diese Adressierung ist mit einem zusätzlichen Kostenaufwand verbunden, da eine zusätzliche Adressierungsleitung mit entsprechenden Pins am Sensor bereitgestellt werden muss.

Ein Verfahren zur Konfiguration eines ultraschallbasierten Fahrerassistenzsystems mit einer Vielzahl von Ultraschallsensoren ist beispielsweise aus der Druckschrift DE 10 2008 005 317 A1 bekannt. Die Ultraschallsensoren weisen von außen erkennbare, absolute Identifikationscodes auf, die auch elektronisch ausgelesen werden können. Die Sensoren werden zunächst eingebaut und über ein elektronisches Bussystem mit dem Steuergerät verbunden. Dann werden alle Identifikationscodes mit einem externen Lesegerät in einer vorgegebenen Reihenfolge ausgelesen und das externe Lesegerät übermittelt die Identifikationscodes an das Steuergerät, damit dieses den Identifikationscodes eine Position am Fahrzeug zuordnen kann.

Die Zuordnung von logischen Adressen bzw. Kennungen zu einer Vielzahl von Ultraschallsensoren ist außerdem aus der DE 10 2008 009 651 A1 bekannt.

Aus der DE 10 2005 055 964 A1 ist bekannt, dass die Adressierung eines bestimmten Sensors in Abhängigkeit von der Signallaufzeit eines Messsignals durchgeführt wird, welches zwischen einem Steuergerät und dem Sensor über einen Kommunikationsbus übertragen wird.

DE 10 2008 000571 A1 beschreibt ein System zur Adressierung einer Mehrzahl von Sende- und Empfangseinheiten zur Ultraschallabstandsmessung mittels Aussenden von Ultraschallsignalen und Empfangen der von einem externen Gegenstand zurückgeworfenen Echos, welches eine Adressen-Zuweisungseinrichtung umfasst zum Zuweisen einer eindeutigen Adresse an jede der Sende- und Empfangseinheiten auf Grundlage eines Unterschiedes in einer Empfangseigenschaft der Sende- und Empfangseinheiten untereinander bezüglich des Empfangs der zurückgeworfenen Echos.

Nachveröffentlichte EP 2 426 869 A1 betrifft ein Sensorsystem für ein Fahrzeug, wobei das Sensorsystem mindestens aufweist: mehrere Sensoren, insbesondere Entfernungssensoren, die jeweils eine Bus- Anschlusseinrichtung aufweisen und jeweils mindestens ein Messsignal über ihre Bus-Anschlusseinrichtung ausgeben, und einen Bus-Master, wobei der Bus-Master und die mehreren Sensoren ein Bus-System bilden. Die Sensoren sind durch den Bus-Master parametrierbar sind unter Zuweisung ihrer Bus-Adressen in dem Bus-System, wobei die Sensoren jeweils in Abhängigkeit der Detektion eines äußeren Einflusses, insbesondere bei Vorliegen eines Fehler-Zustandes, z. B. eines Transducer-Fehlers, parametrierbar sind.

DE 10 2008 000826 A1 offenbart ein System zur Adressierung einer Mehrzahl von Sende- und Empfangseinheiten einer Ultraschallabstandsmesseinrichtung, welches eine Adressen-Zuweisungseinrichtung umfasst zum Zuweisen einer eindeutigen Adresse an jede der Sende- und Empfangseinheiten entweder auf Grundlage eines Unterschiedes in einer Empfangseigenschaft des Empfangs von Ultraschallpulsen, welche von den Sende- und Empfangseinheiten ausgesandt werden, in einer externen Empfangseinheit, oder auf Grundlage eines Unterschiedes in einer Empfangseigenschaft der Sende- und Empfangseinheiten untereinander bezüglich der von einer externen Sendeeinheit ausgesandten Ultraschallsignale.

Es ist Aufgabe der Erfindung, eine Lösung aufzuzeigen, wie bei einem Verfahren der eingangs genannten Gattung jeweils eine spezifische Kennung zu einer Vielzahl von Sensoren ohne viel Aufwand zugewiesen werden kann.

Diese Aufgabe wird erfindungsgemäß durch ein Verfahren, durch ein System sowie durch eine Recheneinrichtung mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird jeweils eine spezifische Kennung bzw. Adresse zu einer Vielzahl von Sensoren, insbesondere Ultraschallsensoren, eines Fahrerassistenzsystems eines Kraftfahrzeugs mithilfe einer Recheneinrichtung zugewiesen. Die Sensoren kommunizieren über einen gemeinsamen Kommunikationsbus des Kraftfahrzeugs mit einem fahrzeuginternen Steuergerät. Dies bedeutet, dass die Sensoren über den gemeinsamen Kommunikationsbus mit dem Steuergerät verbunden sind. Die Recheneinrichtung kann eine fahrzeugexterne bzw. von dem Kraftfahrzeug separate Recheneinrichtung sein. Alternativ kann die Recheneinrichtung ein Bestandteil des fahrzeugseitigen Fahrerassistenzsystems sein, etwa in das Steuergerät integriert sein. Bei dem Verfahren wird zunächst eine erste Kennung über den Kommunikationsbus an alle Sensoren mittels der Recheneinrichtung übermittelt, und die Sensoren empfangen die erste Kennung. Dann wird eine Messgröße eines ersten, vorbestimmten Sensors beeinflusst, was durch diesen ersten Sensor erfasst wird. Aufgrund dieser Beeinflussung der Messgröße speichert der erste Sensor die erste Kennung als seine zugewiesene spezifische Kennung ab.

Also wird der erfindungsgemäße Effekt dadurch erzielt, dass durch die Recheneinrichtung über den Kommunikationsbus zunächst eine erste Kennung an alle Sensoren gesendet wird und nur derjenige Sensor diese Kennung als seine spezifische Kennung abspeichert, welcher hierzu durch Beeinflussen seiner Messgröße veranlasst wird. Mit anderen Worten wird ein durch einen kennungslosen Sensor erfassbares Ereignis ausgelöst, und dieser Sensor speichert die am Kommunikationsbus vorhandene Kennung aufgrund des Ereignisses ab. Eine solche Vorgehensweise hat den Vorteil, dass die Adressierung der Sensoren bzw. die Zuweisung der Kennungen zu den Sensoren ohne viel Aufwand erfolgen kann und insbesondere auch automatisiert vorgenommen werden kann. Es sind dabei keine zusätzlichen Adressierungsleitungen notwendig, wie sie im Stand der Technik zur Adressierung der Sensoren eingesetzt werden. Ebenfalls sind keine zusätzlichen Steckercodierungen erforderlich, sodass sich der Einsatz von spezifischen Steckern mit den damit verbundenen Nachteilen hinsichtlich der Kosten erübrigt. Die Zuordnung der Kennungen kann dazu auch beliebig oft wiederholt werden. Beispielsweise kann die Zuordnung auch in einer Werkstatt vorgenommen werden. Nicht zuletzt müssen die Sensoren nicht an einer bestimmten Fahrzeugposition verbaut werden, sodass keine gesonderte Teilenummer pro Fahrzeug oder Position notwendig ist.

Damit alle Sensoren des Fahrerassistenzsystems jeweils mit einer spezifischen logischen Kennung versehen werden können, kann folgendes Verfahren durchgeführt bzw. die oben genannte Vorgehensweise wiederholt werden: Die Recheneinrichtung kann eine weitere Kennung über den Kommunikationsbus an alle Sensoren übermitteln, und diese weitere Kennung kann zumindest durch die übrigen, kennungslosen Sensoren empfangen werden. Diese weitere Kennung wird bevorzugt ausschließlich durch die kennungslosen Sensoren empfangen, sodass die bereits mit einer Kennung versehenen Sensoren diese weitere Kennung ignorieren. Dann kann die Messgröße eines weiteren kennungslosen Sensors beeinflusst werden, und dies kann durch diesen weiteren Sensor erfasst werden. Dieser weitere Sensor speichert dann die weitere Kennung als eine zugewiesene spezifische Kennung ab. Dieses Verfahren kann dann in Bezug auf die übrigen, kennungslosen Sensoren so lange wiederholt werden, bis jedem Sensor jeweils eine spezifische Kennung zugewiesen worden ist.

Vorzugsweise wird vor der Übermittlung der ersten Kennung ein Steuerbefehl durch die Recheneinrichtung an die Sensoren übermittelt, aufgrund dessen ein Adressierungsmodus der Sensoren eingeleitet wird, in welchem die Zuweisung der spezifischen Kennungen zu den Sensoren ermöglicht wird. Dies bedeutet, dass die Sensoren zunächst in den spezifischen, von einem Betriebsmodus unterschiedlichen Adressierungsmodus geschaltet werden, damit die Zuweisung bzw. die Abspeicherung der Kennungen überhaupt erfolgen kann. Somit wird verhindert, dass einer der Sensoren ungewollt eine an den Kommunikationsbus gesendete Kennung als seine spezifische Kennung abspeichert.

Hinsichtlich der Beeinflussung der Messgröße bzw. hinsichtlich der Veranlassung eines der Sensoren zum Abspeichern der übermittelten Kennung ist Folgendes vorgesehen:
Es ist vorgesehen, dass vor der Übermittlung der ersten Kennung die Sensoren in einen Empfangsmodus geschaltet werden, in welchem die Sensoren Sensorsignale - insbesondere Ultraschallsignale - ausschließlich empfangen können. Als Messgröße kann hier die Amplitude eines Empfangssignals der jeweiligen Sensoren beeinflusst werden. Auch die Amplitude des Empfangssignals kann ohne viel Aufwand verändert werden, und zwar beispielsweise mittels eines fahrzeugexternen, zusätzlichen Sensors, welcher eigene Sensorsignale aussendet. Die Amplitude des Empfangssignals lässt sich auch ohne viel Aufwand messen - diese Amplitude stellt nämlich eine der Hauptmessgrößen eines Ultraschallsensors dar.

Es wird ein fahrzeugexterner Sensor, insbesondere ein Ultraschallsensor, bereitgestellt werden, und die Beeinflussung der Amplitude des Empfangssignals des jeweiligen Sensors kann dadurch erfolgen, dass an diesen Sensor Sensorsignale durch den fahrzeugexternen Sensor gesendet werden. Empfängt einer der Sensoren die Sensorsignale des fahrzeugexternen Sensors, so wird dies als ein Befehl interpretiert, die momentan an den Kommunikationsbus übermittelte Kennung als eigene, spezifische Kennung abzuspeichern. Der Einsatz eines fahrzeugexternen Sensors ermöglicht also die Beeinflussung der Amplitude des Empfangssignals eines der Sensoren mit geringem technischen Aufwand. Dies kann auch vollständig automatisiert erfolgen, denn es ist grundsätzlich kein Personal erforderlich, um die Messgrößen der Sensoren zu beeinflussen. Der fahrzeugexterne Sensor kann nämlich beispielsweise mittels einer Steuereinrichtung angesteuert werden, die zum Beispiel in die (fahrzeugexterne) Recheneinrichtung integriert sein kann.

Der fahrzeugexterne Sensor wird derart bewegt, dass seine Sensorsignale einen Sensor nach dem anderen in einer vorbestimmten Reihenfolge erreichen, um die jeweiligen Empfangssignale der Sensoren nacheinander zu beeinflussen. Somit können alle Sensoren des Kraftfahrzeugs einer nach dem anderen adressiert werden, denn die Sensoren werden einer nach dem anderen in ihren Empfangssignalen beeinflusst, nämlich mittels des fahrzeugexternen Sensors. Synchron zu der Bewegung des fahrzeugexternen Sensors kann die Recheneinrichtung auch die jeweils neuen Kennungen an die Sensoren übermitteln, sodass sich der jeweils momentan beeinflusste Sensor die aktuelle Kennung abgreift und diese Kennung als seine spezifische Kennung abspeichert.

Nach Abspeichern der zugewiesenen Kennung durch jeden Sensor kann selbiger Sensor eine Information, insbesondere in Form der zugewiesenen Kennung, an die Recheneinrichtung übermitteln. Damit wird die Recheneinrichtung darüber informiert, dass der Sensor die ihm zugewiesene Kennung ordnungsgemäß abgespeichert hat. Es kann somit also eine Plausibilitätsprüfung erfolgen.

Besonders bevorzugt wird der fahrzeugexterne Sensor erst nach Empfang der Information durch die Recheneinrichtung weiter bewegt, um mit seinen Sensorsignalen die Amplitude des Empfangssignals eines nächsten Sensors zu beeinflussen. Es wird somit sichergestellt, dass der nächste Sensor erst dann adressiert wird, wenn feststeht, dass der vorhergehende Sensor ordnungsgemäß seine Kennung abgespeichert hat.

Insgesamt kann dies in einem solchen Verlauf verwirklicht werden: Ein fest installierter, rotationsfähiger fahrzeugexterner Sensor befindet sich auf einer Fahrzeugseite in einer Produktionslinie. Dieser fahrzeugexterne Sensor (Ultraschallsensor) sendet Sensorsignale mit der gleichen Frequenz und derselben Codierung wie die am Fahrzeug verbauten Sensoren. Das Kraftfahrzeug bewegt sich in der Produktionslinie auf den fest installierten Sensor zu, bis sich dieser etwa in einem Winkel von 45°zur Fahrzeugvorderkante befindet. Auf der fahrzeugexternen Recheneinrichtung ist ein Computerprogramm - etwa ein Diagnoseprogramm - installiert, und die Recheneinrichtung ist mit dem fahrzeuginternen Steuergerät kommunikationstechnisch verbunden. Die Recheneinrichtung sendet zunächst einen Steuerbefehl, mit welchem die fahrzeugseitigen Sensoren in den Adressierungsmodus geschaltet werden, in welchem die Adressierung bzw. Neuadressierung aller angeschlossenen Sensoren ermöglicht wird. Daraufhin erkennen alle Sensoren, dass die Adressierung bzw. Neuadressierung stattfinden wird. Bereits adressierte Sensoren verwerfen daraufhin ihre aktuelle Kennung und weisen sich selbst eine vorbestimmte Standardkennung (Default-Adresse) zu. Nun sind alle Sensoren nicht mehr adressiert. Die Sensoren werden mittels der Recheneinrichtung in einen Empfangsmodus geschaltet, in welchem die Sensoren Sensorsignale (Ultraschallsignale) einer bestimmten Codierung (wie der fahrzeugexterne Sensor) empfangen können, allerdings keine Sensorsignale aussenden können. Die Recheneinrichtung sendet nun eine erste, beliebige Kennung an alle Sensoren (z.B. 0x03), und zwar über den fahrzeuginternen Kommunikationsbus. Nun beginnt der fahrzeugexterne Sensor, Sensorsignale auszusenden; dabei ist die Senderichtung des fahrzeugexternen Sensors zunächst von allen Sensoren des Kraftfahrzeugs abgewandt, sodass die Sendesignale des fahrzeugexternen Sensors zunächst keinen der fahrzeugseitigen Sensoren erreichen. Der fahrzeugexterne Sensor wird nun derart bewegt, dass ein vorbestimmter erster Sensor (etwa der erste seitliche Sensor am Kraftfahrzeug) als erster die Sensorsignale des fahrzeugexternen Sensors empfangen kann. Zu diesem Zeitpunkt können die übrigen Sensoren die ausgesendeten Sensorsignale noch nicht erfassen, nämlich aufgrund der Position des fahrzeugexternen Sensors. Sobald der erste Sensor ein korrekt codiertes Echo empfangen hat, übernimmt dieser Sensor die zuvor ausgesendete Adresse und speichert diese als seine spezifische Kennung ab. Daraufhin meldet sich dieser Sensor mit seiner neuen Kennung an die Recheneinrichtung, sodass diese über die ordnungsgemäße Zuweisung der ersten Kennung informiert wird. Dann sendet die Recheneinrichtung eine neue Kennung an alle Sensoren (z.B. die Kennung 0x04). Der bereits adressierte Sensor nimmt nicht mehr weiter an der Adressierung teil und empfängt keine weiteren Kennungen. Nun wird der fahrzeugexterne Sensor derart weiter bewegt, dass ein nächster Sensor am Kraftfahrzeug (gemäß einer vorbestimmten Reihenfolge, etwa der benachbarte Sensor) die ausgesendeten Sensorsignale des fahrzeugexternen Sensors empfangen kann. Empfängt dieser weitere Sensor die Sensorsignale, übernimmt dieser Sensor die momentan am Kommunikationsbus vorhandene Kennung und speichert diese als seine spezifische Kennung bzw. Adresse ab. Dieses Verfahren wird so lange wiederholt, bis alle Sensoren des Kraftfahrzeugs adressiert sind. Dann bewegt sich Kraftfahrzeug weiter in der Produktionslinie. Der fahrzeugexterne Sensor kann dabei als ortsfester, aber rotationsfähiger Sensor oder aber als beweglicher Sensor ausgebildet sein.

Ein erfindungsgemäßes System umfasst ein Fahrerassistenzsystem mit einer Vielzahl von Sensoren sowie eine Recheneinrichtung und ist zum Durchführen eines erfindungsgemäßen Verfahrens ausgebildet.

Eine erfindungsgemäße Recheneinrichtung ist zum Ermöglichen einer automatisierten Zuweisung je einer spezifischen Kennung zu einer Vielzahl von Sensoren, insbesondere Ultraschallsensoren, eines Kraftfahrzeugs ausgebildet. Die Recheneinrichtung ist dazu ausgelegt, eine erste Kennung über einen Kommunikationsbus an alle Sensoren zu übermitteln und ein Beeinflussen einer Messgröße eines vorbestimmten kennungslosen Sensors zu veranlassen, um die Speicherung der Kennung durch diesen Sensor zu bewirken. Dabei kann das Beeinflussen der Messgröße dadurch veranlasst werden, dass die Recheneinrichtung eine Bedienperson dazu anweist, einen Druck auf den Sensor auszuüben, um die Beeinflussung seiner Resonanzfrequenz als Messgröße zu bewirken. Alternativ kann das Beeinflussen der Messgröße dadurch veranlasst werden, dass ein fahrzeugexterner Sensor Sensorsignale an den fahrzeugseitigen Sensor sendet, um die Beeinflussung einer Amplitude seines Empfangssignals als Messgröße zu bewirken.

Die mit Bezug auf das erfindungsgemäße Verfahren vorgestellten bevorzugten Ausführungsformen und deren Vorteile gelten entsprechend für das erfindungsgemäße System sowie - soweit anwendbar - für die erfindungsgemäße Recheneinrichtung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Dabei zeigen:
- Fig. 1: in schematischer Darstellung ein Fahrerassistenzsystem eines Kraftfahrzeugs, dessen Ultraschallsensoren adressiert werden sollen;
- Fig. 2: in schematischer Darstellung ein Szenario zum Durchführen eines Verfahrens gemäß einer ersten Ausführungsform nicht gemäß der Erfindung;
- Fig. 3 und 4: in schematischer Darstellung jeweils ein Szenario zum Durchführen eines Verfahrens gemäß einer zweiten Ausführungsform der Erfindung; und
- Fig. 5: in schematischer Darstellung ein Szenario zum Durchführen eines Verfahrens gemäß einer dritten Ausführungsform der Erfindung.

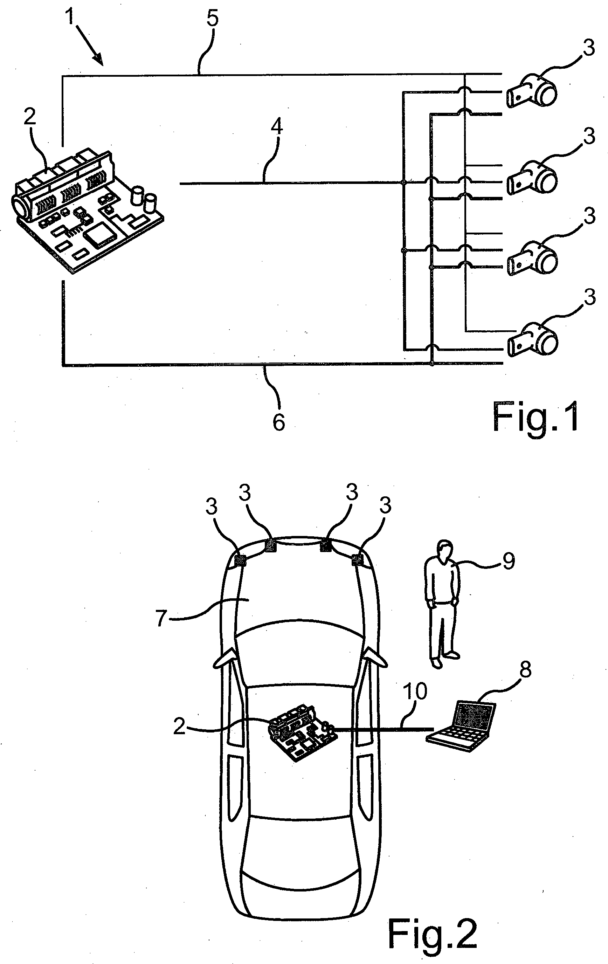

In Fig. 1 ist ein Fahrerassistenzsystem 1 dargestellt, welches im Ausführungsbeispiel als eine Parkhilfe bzw. ein Parkhilfesystem ausgebildet ist und zum Unterstützen eines Fahrers eines Kraftfahrzeugs beim Einparken dient. Das Fahrerassistenzsystem 1 umfasst ein Steuergerät 2 sowie eine Vielzahl von Sensoren 3, nämlich Ultraschallsensoren. Alle Sensoren 3 sind über einen Kommunikationsbus 4 des Kraftfahrzeugs mit dem Steuergerät 2 kommunikationstechnisch gekoppelt und können mit dem Steuergerät 2 über den Kommunikationsbus 4 kommunizieren. Außerdem sind alle Sensoren 3 an Versorgungsleitungen angeschlossen, nämlich eine erste Versorgungsleitung 5 mit einem positiven elektrischen Potential sowie eine zweite Versorgungsleitung 6, an welcher das Bezugspotential (Masse) bereitgestellt ist.

Nun sollen die Sensoren 3 adressiert werden. Dies bedeutet, dass jeweils eine spezifische Kennung bzw. Adresse allen Sensoren 3 zugewiesen werden soll. Diese Kennung kennzeichnet dann den jeweiligen Sensor eindeutig und gibt auch seine Position am Kraftfahrzeug an. Nachfolgend werden Szenarien beschrieben, welche zur automatisierten Adressierung der Sensoren 3 dienen.

In Fig. 2 ist ein erstes, nicht erfindungsgemäßes Szenario dargestellt, bei welchem Sensoren 3 eines Kraftfahrzeugs 7 adressiert werden. Es ist eine fahrzeugexterne Recheneinrichtung 8 bereitgestellt, die hier in Form eines Notebooks ausgebildet ist. Die Recheneinrichtung 8 wird durch eine Bedienperson 9 bedient, welche die Adressierung der Sensoren 3 unterstützt. Auf der Recheneinrichtung 8 ist ein Diagnoseprogramm oder ein anderes Computerprogramm installiert, und die Recheneinrichtung 8 ist an das Empfängt dieser weitere Sensor die Sensorsignale, übernimmt dieser Sensor die momentan am Kommunikationsbus vorhandene Kennung und speichert diese als seine spezifische Kennung bzw. Adresse ab. Dieses Verfahren wird so lange wiederholt, bis alle Sensoren des Kraftfahrzeugs adressiert sind. Dann bewegt sich Kraftfahrzeug weiter in der Produktionslinie. Der fahrzeugexterne Sensor kann dabei als ortsfester, aber rotationsfähiger Sensor oder aber als beweglicher Sensor ausgebildet sein.

Ein erfindungsgemäßes System umfasst ein Fahrerassistenzsystem mit einer Vielzahl von Sensoren sowie eine Recheneinrichtung und ist zum Durchführen eines erfindungsgemäßen Verfahrens ausgebildet.

Eine erfindungsgemäße Recheneinrichtung ist zum Ermöglichen einer automatisierten Zuweisung je einer spezifischen Kennung zu einer Vielzahl von Sensoren, insbesondere Ultraschallsensoren, eines Kraftfahrzeugs ausgebildet. Die Recheneinrichtung ist dazu ausgelegt, eine erste Kennung über einen Kommunikationsbus an alle Sensoren zu übermitteln und ein Beeinflussen einer Messgröße eines vorbestimmten kennungslosen Sensors zu veranlassen, um die Speicherung der Kennung durch diesen Sensor zu bewirken. Das Beeinflussen der Messgröße wird dadurch veranlasst, dass ein fahrzeugexterner Sensor Sensorsignale an den fahrzeugseitigen Sensor sendet, um die Beeinflussung einer Amplitude seines Empfangssignals als Messgröße zu bewirken.

Die mit Bezug auf das erfindungsgemäße Verfahren vorgestellten bevorzugten Ausführungsformen und deren Vorteile gelten entsprechend für das erfindungsgemäße System sowie - soweit anwendbar - für die erfindungsgemäße Recheneinrichtung.

Weitere Merkmale der Erfindung ergeben sich aus den Ansprüchen, den Figuren und der Figurenbeschreibung.

Die Erfindung wird nun anhand einzelner bevorzugter Ausführungsbeispiele, wie auch unter Bezugnahme auf die beigefügten Zeichnungen näher erläutert.

alle Sensoren 3 adressiert wurden. Sind alle Sensoren 3 adressiert, so kann die Recheneinrichtung 8 die Bedienperson 9 auch dazu auffordern, die vorgenommene Adressierung nochmals zu überprüfen, indem die Bedienperson 9 noch einmal die Membranen aller Sensoren 3 in einer vorbestimmten Reihenfolge drückt, woraufhin alle Sensoren 3 beim Drücken der eigenen Membran ihre bereits abgespeicherte Kennung an die Recheneinrichtung 8 senden. Die Recheneinrichtung 8 vergleicht dann die Reihenfolge der erhaltenen Kennungen mit den erwarteten. Zuletzt sendet die Recheneinrichtung 8 einen Befehl zum Abschluss des Adressierungsmodus an alle Sensoren 3, und die Sensoren 3 reagieren wieder ordnungsgemäß Befehle des Steuergeräts 2.

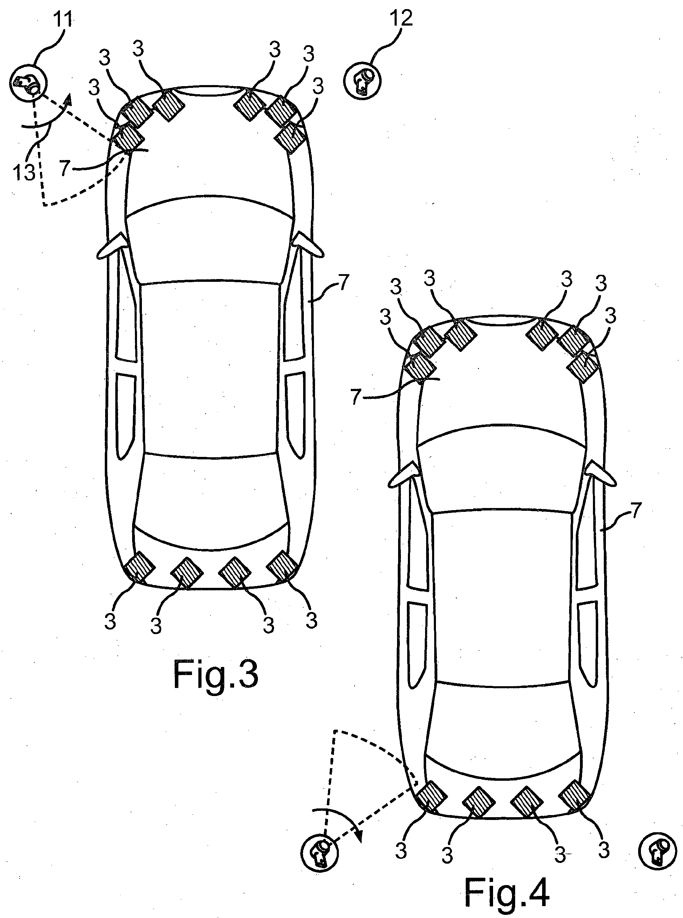

In den Fig. 3 und 4 ist ein zweites, erfindungsgemäßes Szenario dargestellt, bei welchem Ultraschallsensoren 3 eines Kraftfahrzeugs 7 bzw. eines Fahrerassistenzsystems 1 gemäß Fig. 1 adressiert werden können. Hier werden die Sensoren 3 beispielsweise auf einer Produktionsstraße adressiert. Das Kraftfahrzeug 7 bewegt sich also auf einer Produktionsstraße bzw. Produktionslinie und erreicht eine Position, in welcher die Sensoren 3 adressiert werden können. Auch in diesem Szenario ist die fahrzeugexterne Einrichtung 8 (in den Fig. 3 und 4 nicht dargestellt) bereitgestellt, welche mit dem ebenfalls nicht dargestellten Steuergerät 2 gekoppelt und hierdurch an den Kommunikationsbus 4 angeschlossen ist. Es sind auf der Produktionslinie insgesamt zwei fahrzeugexterne Ultraschallsensoren 11, 12 bereitgestellt, welche ortsfest positioniert sind. Die fahrzeugexternen Ultraschallsensoren 11, 12 sind dabei drehbar ausgeführt und können somit gemäß dem Pfeil 13 gedreht werden. Die Ultraschallsensoren 11, 12 sind auf gegenüberliegenden Seiten der Produktionslinie derart in einem Abstand zueinander angeordnet, dass das Kraftfahrzeug 7 durch einen Zwischenbereich zwischen den Sensoren 11, 12 durchfahren kann.

Das Kraftfahrzeug 7 bewegt sich gemäß Fig. 3 in der Produktionslinie auf die fest installierten fahrzeugexternen Ultraschallsensoren 11, 12 zu, bis sich diese etwa in einem Winkel von 45° zur Fahrzeugvorderkante befinden, wi e in Fig. 3 dargestellt ist. Die fahrzeugexterne Recheneinrichtung sendet einen Steuerbefehl an allen Sensoren 3, sodass der oben genannte Adressierungsmodus eingeschaltet wird. Bereits adressierte Sensoren 3 verwerfen daraufhin -wie oben bereits beschrieben - ihre aktuelle Kennung und weisen sich eine "Default-Adresse" zu.

Die Sensoren 3 werden nun mittels der Recheneinrichtung in einen Empfangsmodus geschaltet, in welchem die Sensoren 3 Ultraschallwellen der fahrzeugexternen Ultraschallsensoren 11, 12 empfangen, jedoch keine Sendesignale aussenden können.

Die Recheneinrichtung 8 sendet in der oben beschriebenen Art und Weise eine erste Kennung an alle Sensoren 3, sodass diese erste Kennung durch alle Sensoren 3 empfangen wird. Nun beginnt der fest installierte, rotationsfähige Ultraschallsensor 11, Ultraschallwellen eines bestimmten, von den Sensoren 3 wieder erkennbaren Codes zu senden. Dabei ist die Senderichtung zunächst von allen Sensoren 3 des Kraftfahrzeugs 7 abgewandt. Der Ultraschallsensor 11 wird nun gemäß dem Pfeil 13 langsam gedreht, sodass der seitliche erste (linke) Sensor 3 am vorderen Stoßfänger des Kraftfahrzeugs 7 als erster die Ultraschallwellen des Ultraschallsensors 11 empfangen kann. Diese Ultraschallwellen erreichen also ausschließlich den ersten linken Sensor 3. Sobald dieser erste Sensor 3 ein korrekt codiertes Echo des Ultraschallsensors 11 empfangen hat, übernimmt dieser Sensor 3 die zuvor ausgesendete Kennung und speichert diese als seine spezifische Kennung ab. Dieser Sensor 3 meldet sich auch mit seiner neuen Kennung an das Steuergerät 2 des Kraftfahrzeugs 7. Dies wird auch von der fahrzeugexternen Recheneinrichtung 8 empfangen. Die Recheneinrichtung 8 empfängt die Kennung des zuerst adressierten Sensors 3 und sendet eine neue Kennung an alle Sensoren 3. Der bereits adressierte Sensor 3 nimmt nicht mehr weiter an der Adressierung teil. Nun wird der Ultraschallsensor 11 weiter derart gedreht, dass die ausgesendeten Ultraschallwellen den nächsten, also den zweiten Sensor 3 erreichen. Werden die Ultraschallwellen durch den zweiten Sensor 3 empfangen, so übernimmt dieser Sensor 3 die zweite Kennung und speichert diese als seine spezifische Kennung ab. Diese Prozedur wird nun weiter geführt, bis der Ultraschallsensor 11 keine weiteren Sensoren 3 mehr erreichen kann. Selbige Prozedur wird auch auf der rechten Seite des Kraftfahrzeugs 7 mittels des Ultraschallsensors 12 durchgeführt. Dies kann beispielsweise im Anschluss an die Adressierung der linken Sensoren 3 erfolgen.

Nachdem alle vorderen Sensoren 3 adressiert sind, bewegt sich das Kraftfahrzeug 7 weiter in der Produktionslinie und die Adressierung der hinteren Sensoren 3 kann in gleicher Art und Weise durchgeführt werden, wie in Fig. 4 dargestellt.

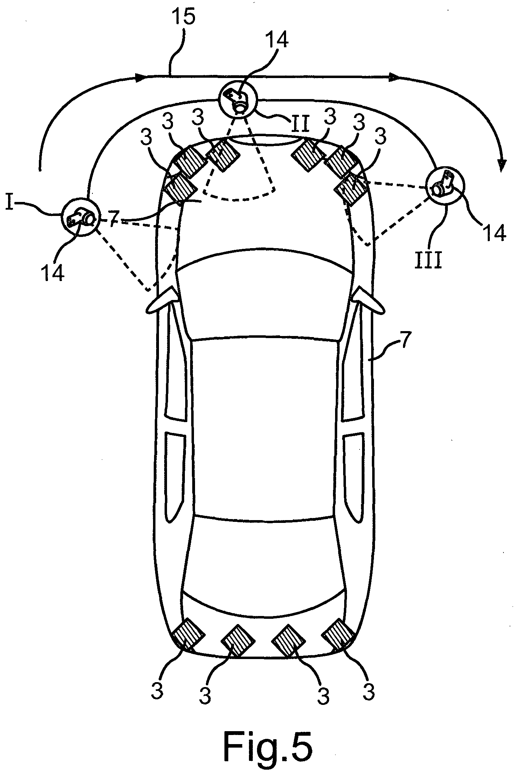

In Fig. 5 ist ein weiteres, erfindungsgemäßes Szenario zum Adressieren der Sensoren 3 des Kraftfahrzeugs 7 dargestellt. Dieses Ausführungsbeispiel gemäß Fig. 5 entspricht im Wesentlichen dem gemäß den Fig. 3 und 4, wobei der einzige Unterschied darin besteht, dass anstatt von zwei fahrzeugexternen Ultraschallsensoren ein einziger Ultraschallsensor 14 verwendet wird, welcher nicht ortsfest, sondern beweglich angeordnet ist. Anstatt den externen Ultraschallsensor zu drehen, wird der Ultraschallsensor 14 hier entlang eines bogenförmigen Abschnitts in Richtung gemäß der Pfeildarstellung 15 bezüglich des Kraftfahrzeugs 7 bewegt. Dabei sind in Fig. 5 drei unterschiedliche Stellungen I-III des Ultraschallsensors 14 dargestellt. Hier kann vorgesehen sein, dass der einzige Sensor 14 um das gesamte Kraftfahrzeug 7 herumbewegt wird, oder aber der Ultraschallsensor 14 kann nur entlang des vorderen Stoßfängers bewegt werden, und anschließend kann das Kraftfahrzeug 7 auf der Produktionslinie weiter nach vorne bewegt werden, damit auch die hinteren Sensoren 3 adressiert werden können.

## Patentansprüche

1. Verfahren zum automatisierten Zuweisen je einer spezifischen Kennung zu einer Vielzahl von als Ultraschallsensoren ausgebildeten Sensoren (3) eines Fahrerassistenzsystems (1) eines Kraftfahrzeugs (7) mithilfe einer Recheneinrichtung (8), wobei die Sensoren (3) über einen gemeinsamen Kommunikationsbus (4) des Kraftfahrzeugs (7) mit einem fahrzeuginternen Steuergerät (2) kommunizieren, mit den Schritten:
- Übermitteln einer ersten Kennung über den Kommunikationsbus (4) an alle Sensoren (3) mittels der Recheneinrichtung (8) und Empfangen der ersten Kennung durch die Sensoren (3),
- Beeinflussen einer Messgröße eines ersten kennungslosen Sensors (3) und Erfassen dieser Beeinflussung durch den ersten Sensor (3) und
- Abspeichern der ersten Kennung als einer zugewiesenen spezifischen Kennung durch den ersten Sensor (3) aufgrund der Beeinflussung seiner Messgröße
wobei vor der Übermittlung der ersten Kennung die Sensoren (3) in einen Empfangsmodus geschaltet werden, in welchem die Sensoren (3) Ultraschallsignale ausschließlich empfangen, und als Messgröße die Amplitude eines Empfangssignals der jeweiligen Sensoren (3) beeinflusst wird,
wobei ein als Ultraschallsensor ausgebildeter fahrzeugexterner Sensor (11, 12, 13) bereitgestellt wird und die Beeinflussung der Amplitude des Empfangssignals des jeweiligen Sensors (3) dadurch erfolgt, dass an diesen Sensor (3) Sensorsignale durch den fahrzeugexternen Sensor (11, 12, 13) gesendet werden,
und wobei der fahrzeugexterne Sensor (11, 12, 13) derart bewegt wird, dass seine Sensorsignale einen Sensor (3) nach dem anderen in einer vorbestimmten Reihenfolge erreichen, um die jeweiligen Empfangssignale der Sensoren (3) nacheinander zu beeinflussen.

2. Verfahren nach Anspruch 1,
**gekennzeichnet durch**
- Übermitteln einer weiteren Kennung über den Kommunikationsbus (4) an alle Sensoren (3) mittels der Recheneinrichtung (8) und Empfangen der weiteren Kennung zumindest **durch** die kennungslosen Sensoren (3),
- Beeinflussen der Messgröße eines weiteren kennungslosen Sensors (3) und Erfassen dieser Beeinflussung **durch** den weiteren Sensor (3) und
- Abspeichern der weiteren Kennung als einer zugewiesenen spezifischen Kennung **durch** den weiteren Sensor (3) aufgrund der Beeinflussung,
wobei das Verfahren in Bezug auf die übrigen Sensoren (3) solange wiederholt wird, bis jedem Sensor (3) jeweils eine spezifische Kennung zugewiesen worden ist.

3. Verfahren nach Anspruch 1 oder 2,
**dadurch gekennzeichnet, dass**
vor der Übermittlung der ersten Kennung ein Steuerbefehl durch die Recheneinrichtung (8) an die Sensoren (3) übermittelt wird, aufgrund dessen ein Adressierungsmodus der Sensoren (3) eingeleitet wird, in welchem die Zuweisung der spezifischen Kennungen zu den Sensoren (3) ermöglicht wird.

4. Verfahren nach einem der Ansprüche 1 bis 3,
**dadurch gekennzeichnet, dass**
nach Abspeichern der zugewiesenen Kennung durch jeden Sensor (3) selbiger Sensor (3) eine Information, insbesondere die zugewiesene Kennung, an die Recheneinrichtung (8) übermittelt, so dass durch diese Information die Recheneinrichtung (8) über die ordnungsgemäße Abspeicherung der Kennung durch den Sensor (3) informiert wird.

5. Verfahren nach einem der Ansprüche 1 bis 3 und Anspruch 4,
**dadurch gekennzeichnet, dass**
erst nach Empfang der Information durch die Recheneinrichtung (8) der fahrzeugexterne Sensor (11, 12, 13) weiterbewegt wird, um mit seinen Sensorsignalen die Amplitude des Empfangssignals eines nächsten Sensors (3) zu beeinflussen.

6. System mit:
- Einem Kraftfahrzeug (7) mit Fahrerassistenzsystem (1) mit als Ultraschallsensoren ausgebildeten Sensoren (3), einem gemeinsamen Kommunikationsbus (4) und mit einem mit einem fahrzeuginternen Steuergerät (2),
- mit einem als Ultraschallsensor ausgebildeten fahrzeugexternen Sensor (11, 12, 13),
- und mit einer Recheneinrichtung (8),
wobei die Sensoren (3) ausgebildet sind
- über einen gemeinsamen Kommunikationsbus (4) des Kraftfahrzeugs (7) mit einem fahrzeuginternen Steuergerät (2) kommunizieren,
- eine ersten Kennung von der Recheneinrichtung (8) über den Kommunikationsbus (4) zu empfangen,
- ein Beeinflussen einer Messgröße zu erfassen
- und die erste Kennung als zugewiesene spezifische Kennung durch den ersten Sensor (3) aufgrund der Beeinflussung seiner Messgröße zu speichern,
und wobei die Recheneinrichtung (8) ausgebildet ist
- die Sensoren (3) in einen Empfangsmodus zu schalten werden, in welchem die Sensoren (3) Ultraschallsignale ausschließlich empfangen,
- und danach eine erste Kennung über den Kommunikationsbus (4) an alle Sensoren (3) zu übermitteln,
- eine Messgröße eines ersten kennungslosen Sensors (3) zu beeinflussen, wobei als Messgröße die Amplitude eines Empfangssignals des ersten Sensors (3) beeinflusst wird,
- und zur Beeinflussung der Amplitude des Empfangssignals der jeweiligen Sensoren (3) den fahrzeugexternen Sensor (11, 12, 13) so anzusteuern, dass er derart bewegt wird, dass seine Sensorsignale einen Sensor (3) nach dem anderen in einer vorbestimmten Reihenfolge erreichen, um die jeweiligen Empfangssignale der Sensoren (3) nacheinander zu beeinflussen.

## Claims

1. Method for automatically assigning a specific identifier to each of a multiplicity of sensors (3) in the form of ultrasonic sensors in a driver assistance system (1) of a motor vehicle (7) with the aid of a computing device (8), wherein the sensors (3) communicate with a control device (2) inside the vehicle via a common communication bus (4) of the motor vehicle (7), having the following steps:
- a first identifier is transmitted to all sensors (3) via the communication bus (4) by means of the computing device (8) and the first identifier is received by the sensors (3),
- a measurement variable of a first sensor (3) without an identifier is influenced and this influencing is recorded by the first sensor (3), and
- the first identifier is stored as an assigned specific identifier by the first sensor (3) on the basis of the influencing of its measurement variable,
wherein, before the first identifier is transmitted, the sensors (3) are switched to a reception mode in which the sensors (3) only receive ultrasonic signals, and the amplitude of a reception signal of the respective sensors (3) is influenced as the measurement variable,
wherein a sensor (11, 12, 13) which is in the form of an ultrasonic sensor and is outside the vehicle is provided, and the amplitude of the reception signal of the respective sensor (3) is influenced by sensor signals being transmitted to this sensor (3) by the sensor (11, 12, 13) outside the vehicle,
and wherein the sensor (11, 12, 13) outside the vehicle is moved in such a manner that its sensor signals reach one sensor (3) after the other in a predetermined order in order to influence the respective reception signals of the sensors (3) in succession.

2. Method according to Claim 1,
**characterized by**
- transmission of a further identifier to all sensors (3) via the communication bus (4) by means of the computing device (8) and reception of the further identifier at least by the sensors (3) without an identifier,
- influencing of the measurement variable of a further sensor (3) without an identifier and recording of this influencing by the further sensor (3), and
- storage of the further identifier as an assigned specific identifier by the further sensor (3) on the basis of the influencing,
wherein the method is repeated with respect to the remaining sensors (3) until a specific identifier has been respectively assigned to each sensor (3).

3. Method according to Claim 1 or 2,
**characterized in that**
before the first identifier is transmitted, the computing device (8) transmits a control command to the sensors (3), on the basis of which control command an addressing mode of the sensors (3) is initiated, in which it is possible to assign the specific identifiers to the sensors (3).

4. Method according to one of Claims 1 to 3,
**characterized in that**
after the assigned identifier has been stored by each sensor (3), the same sensor (3) transmits an item of information, in particular the assigned identifier, to the computing device (8), with the result that this information is used to inform the computing device (8) of the proper storage of the identifier by the sensor (3).

5. Method according to one of Claims 1 to 3 and Claim 4,
**characterized in that**
the sensor (11, 12, 13) outside the vehicle is moved further only after the information has been received by the computing device (8) in order to use its sensor signals to influence the amplitude of the reception signal of a next sensor (3).

6. System having:
- a motor vehicle (7) with a driver assistance system (1) having sensors (3) in the form of ultrasonic sensors, a common communication bus (4) and a control device (2) inside the vehicle,
- a sensor (11, 12, 13) which is in the form of an ultrasonic sensor and is outside the vehicle,
- and a computing device (8),
wherein the sensors (3) are designed
- to communicate with a control device (2) inside the vehicle via a common communication bus (4) of the motor vehicle (7),
- to receive a first identifier from the computing device (8) via the communication bus (4),
- to record influencing of a measurement variable,
- and to store the first identifier as an assigned specific identifier by means of the first sensor (3) on the basis of the influencing of its measurement variable,
and wherein the computing device (8) is designed
- to switch the sensors (3) to a reception mode in which the sensors (3) only receive ultrasonic signals,
- and to then transmit a first identifier to all sensors (3) via the communication bus (4),
- to influence a measurement variable of a first sensor (3) without an identifier, wherein the amplitude of a reception signal of the first sensor (3) is influenced as the measurement variable,
- and, in order to influence the amplitude of the reception signal of the respective sensors (3), to control the sensor (11, 12, 13) outside the vehicle such that it is moved in such a manner that its sensor signals reach one sensor (3) after the other in a predetermined order in order to influence the respective reception signals of the sensors (3) in succession.

## Revendications

1. Procédé d'attribution automatique d'une caractéristique spécifique à plusieurs capteurs (3), configurés comme capteurs à ultrasons, d'un système (1) d'assistance au conducteur d'un véhicule automobile (7), au moyen d'un dispositif de calcul (8), les capteurs (3) communiquant avec un appareil de commande (2) interne au véhicule par l'intermédiaire d'un bus commun de communication (4) du véhicule automobile (7), le procédé comportant les étapes suivantes :
transmission d'une première caractéristique par l'intermédiaire du bus de communication (4) à tous les capteurs (3) au moyen du dispositif de calcul (8) et réception de la première caractéristique par les capteurs (3),
action sur une grandeur de mesure d'un premier capteur (3) sans caractéristique et saisie de cette action par le premier capteur (3) et
mise en mémoire de la première caractéristique comme caractéristique spécifique attribuée, par le premier capteur (3), sur la base de l'action exercée sur sa grandeur de mesure,
les capteurs (3) étant, avant la transmission de la première caractéristique, commutés dans un mode de réception dans lequel les capteurs (3) peuvent uniquement recevoir des signaux d'ultrasons, l'amplitude d'un signal de réception de chaque capteur (3) étant la grandeur de mesure sur laquelle on agit,
un capteur (11, 12, 13) externe au véhicule, configuré comme capteur à ultrasons, étant prévu, et l'action sur l'amplitude du signal de réception du capteur (3) concerné s'effectuant en en faisant envoyer les signaux à ces capteurs (3) par le capteur (11, 12, 13) externe au véhicule et
le capteur (11, 12, 13) externe au véhicule étant déplacé de telle sorte que ses signaux atteignent un capteur (3) après l'autre dans une succession prédéterminée pour agir successivement sur les différents signaux de réception des capteurs (3).

2. Procédé selon la revendication 1, **caractérisé par**
la transmission d'une autre caractéristique à tous les capteurs (3) sur le bus de communication (4) au moyen du dispositif de calcul (8) et la réception de l'autre caractéristique au moins par les capteurs (3) sans caractéristique,
l'action sur la grandeur de mesure d'un autre capteur (3) sans caractéristique, la saisie de cette action par l'autre capteur (3) et
sur base de l'action, la mise en mémoire de l'autre caractéristique par l'autre capteur (3) comme caractéristique spécifique attribuée,
le procédé étant répété sur les autres capteurs (3) jusqu'à ce qu'une caractéristique spécifique ait été attribuée à chaque capteur (3).

3. Procédé selon les revendications 1 ou 2, **caractérisé en ce qu'**avant la transmission de la première caractéristique, un ordre de commande transmis aux capteurs (3) par le dispositif de calcul (8) lance un mode d'adressage des capteurs (3) dans lequel l'attribution des caractéristiques spécifiques aux capteurs (3) est rendue possible.

4. Procédé selon l'une des revendications 1 à 3, **caractérisé en ce qu'**après la mise en mémoire de la caractéristique attribuée par chaque capteur (3), le même capteur (3) transmet une information, en particulier la caractéristique qui lui a été attribuée, au dispositif de calcul (8) de telle sorte que grâce à cette information, le dispositif de calcul (8) est informé de la mise en mémoire correcte de la caractéristique par le capteur (3).

5. Procédé selon l'une des revendications 1 à 3 et la revendication 4, **caractérisé en ce que** le capteur (11, 12, 13) externe au véhicule ne poursuit son déplacement qu'après la réception de l'information par le dispositif de calcul (8) pour agir par ses signaux sur l'amplitude du signal de réception du capteur (3) suivant.

6. Système présentant :
un véhicule automobile (7) doté d'un système (1) d'assistance au conducteur équipé de capteurs (3) configurés comme capteurs à ultrasons, un bus commun de communication (4) et un appareil de commande (2) interne au véhicule,
un capteur (11, 12, 13) externe au véhicule et configuré comme capteur à ultrasons et
un dispositif de calcul (8),
les capteurs (3) étant configurés pour
communiquer par un bus commun de communication (4) du véhicule automobile (7) avec un appareil de commande (2) interne au véhicule,
par l'intermédiaire du bus de communication (4), recevoir du dispositif de calcul (8) une première caractéristique,
détecter une action sur une grandeur de mesure et
faire conserver en mémoire par le premier capteur (3) la première caractéristique comme caractéristique spécifique attribuée, sur la base de l'action exécutée sur sa grandeur de mesure,
le dispositif de calcul (8) étant configuré pour
commuter les capteurs (3) dans un mode de réception dans lequel les capteurs (3) peuvent uniquement recevoir des signaux d'ultrasons,
ensuite, transmettre à tous les capteurs (3) une première caractéristique par l'intermédiaire du bus de communication (4),
agir sur une grandeur de mesure d'un premier capteur (3) sans caractéristique, la grandeur de mesure sur laquelle on agit étant l'amplitude du signal de réception du premier capteur (3) et
pour agir sur l'amplitude du signal de réception de chaque capteur (3), amener le capteur (11, 12, 13) externe au véhicule à être déplacé de sorte que ses signaux atteignent les capteurs (3) l'un après l'autre dans une succession prédéterminée pour agir successivement sur les signaux de réception des capteurs (3).
